# FASCICULE DE BREVET EUROPEEN

(11) **EP 1 738 526 B1**
(45) Date de publication et mention de la délivrance du brevet: **14.07.2010**
(21) Numéro de dépôt: 05715641.6
(22) Date de dépôt: 02.03.2005
(51) Int. Cl.: H04L 12/28, H04L 29/06

(54) **PROCEDE ET SYSTEME D'ACCREDITATION D'UN CLIENT POUR L'ACCES A UN RESEAU VIRTUEL PERMETTANT D'ACCEDER A DES SERVICES**
VERFAHREN UND SYSTEM ZUR AKKREDITIERUNG FÜR EINEN CLIENT ZUR ERMÖGLICHUNG DES ZUGANGS ZU EINEM VIRTUELLEN NETZWERK FÜR ZUGANG ZU DIENSTEN
METHOD AND SYSTEM OF ACCREDITATION FOR A CLIENT ENABLING ACCESS TO A VIRTUAL NETWORK FOR ACCESS TO SERVICES

(30) Priorité: 03.03.2004 EP 04290584
(43) Date de publication de la demande: 03.01.2007
(73) Titulaire: FRANCE TELECOM, 75015 Paris (FR)
(72) Inventeur: MINODIER, David, F-22300 Lannion (FR); IVANOFF, Gilles, F-22560 Trebeurden (FR)
(74) Mandataire: Bioret, Ludovic
(86) Numéro de dépôt international: PCT/EP2005/002156
(87) Numéro de publication internationale: WO 2005/096551

(56) Documents cités:
- US-A- 5 668 875
- US-A- 6 032 118
- US-A1- 2002 191 572

## Description

La présente invention concerne un procédé et un système d'accréditation d'un client pour l'accès à un réseau de télécommunication permettant au client d'accéder à des services fournis par des fournisseurs de services.

L'invention se situe dans le domaine de l'accréditation de clients désirant s'abonner à des services délivrés par des fournisseurs de services dans un réseau de télécommunication tel que par exemple le réseau Internet et cela par l'intermédiaire de liaisons point à point avec un multiplexeur numérique de lignes de clients. Ces liaisons sont par exemple des liaisons de type DSL. DSL est l'acronyme de « Digital Subscriber Line ». Ces liaisons peuvent aussi être des liaisons sans fil ou des liaisons par fibres optiques entre chaque client et le multiplexeur numérique de lignes de clients auxquels les clients sont reliés.

Dans les systèmes classiques d'accès à l'Internet utilisant des liaisons par exemple de type DSL, chaque client est relié à un multiplexeur numérique de lignes de clients qui est lui-même connecté à un concentrateur de sessions PPP. PPP est l'acronyme de « Point to Point Protocol ». Une session PPP est une session établie selon un protocole point à point. Un concentrateur de sessions PPP est classiquement appelé un BAS, acronyme de Broadband Access Server. Un concentrateur de sessions PPP achemine les sessions établies par les différents clients du réseau vers le point de présence du fournisseur de services auquel ils sont abonnés.

Lorsqu'un nouveau client désire s'abonner à des services proposés par un fournisseur de services de type DSL, un canal virtuel ATM VC est créé par un opérateur entre le modem DSL du nouveau client et le serveur BAS. Les canaux virtuels des clients abonnés au même fournisseur de services sont groupés dans des chemins virtuels ou VP entre les différents multiplexeurs numériques de lignes de clients et le concentrateur de sessions PPP.

Lorsque le client désire que son abonnement soit créé, modifié ou supprimé, il est souvent nécessaire de modifier le chemin virtuel emprunté ou devant être emprunté par le canal virtuel du client. Pour cela il est nécessaire de faire appel à des interventions humaines pour redimensionner le chemin virtuel entre le multiplexeur numérique de ligne de clients auquel est relié le client et le concentrateur de sessions PPP. Ainsi, il est souvent nécessaire de supprimer le chemin virtuel existant entre le multiplexeur numérique de ligne de clients auquel est relié le client et le concentrateur de sessions PPP pour recréer un nouveau chemin virtuel. Ceci provoque, pour tous les clients reliés au concentrateur de sessions PPP, une interruption de la fourniture des services proposés par le fournisseur de services. Une telle interruption pénalise ainsi tous les clients reliés au concentrateur de sessions PPP.

Sont connus les réseaux de type GigaEthernet qui offrent une bande passante très importante pour la transmission d'informations. Un réseau de type GigaEthernet est un réseau de télécommunication à haut débit basé sur la technologie Ethernet. Un réseau de type GigaEthernet autorise des transferts de données à des débits supérieurs à un Gigabits par seconde. Ces systèmes utilisent des protocoles de contrôle d'accès pour l'accès à un réseau comme par exemple le protocole tel que défini dans la norme IEEE 802.1x. Le protocole de contrôle d'accès tel que défini dans la norme IEEE 802.1x est aussi appelé protocole d'accréditation. Ce protocole nécessite que le client qui désire se connecter au réseau dispose d'un logiciel compatible avec le protocole utilisé. Ce type de protocole de contrôle d'accès est conçu pour les réseaux locaux d'entreprises ou des groupes de clients prédéfinis mais n'a pas été envisagé dans des réseaux de télécommunications permettant l'accès à Internet par l'intermédiaire de connexion de type DSL à une multitude clients disposant d'équipements et de logiciels variés.

L'invention a pour but de résoudre les inconvénients de l'art antérieur en proposant un procédé et un système d'accréditation d'un client pour l'accès à un réseau virtuel permettant au client d'accéder à des services fournis par des fournisseurs de services dans lequel une intervention humaine n'est pas requise au niveau du réseau de télécommunication. De plus l'invention vise à garantir aux clients que les services fournis par les fournisseurs de services auxquels ils sont abonnés ne soient pas interrompus lorsque qu'un nouveau client s'abonne ou modifie son abonnement au même fournisseur de services auquel ils sont abonnés. De plus l'invention vise à permettre à des clients disposant d'équipements et de logiciels variés de pouvoir s'abonner à un fournisseur de service de manière automatique et cela même si ceux-ci ne disposent pas de logiciels compatibles avec le logiciel de contrôle d'accès utilisé dans le réseau de télécommunication.

A cette fin, selon un premier aspect, l'invention propose un procédé d'accréditation d'un client pour l'accès à au moins un réseau virtuel permettant au client d'accéder aux services d'au moins un fournisseur de services, le ou chaque réseau virtuel étant établi sur un réseau de télécommunication, caractérisé en ce qu'il comporte les étapes de détermination de la compatibilité du client avec un protocole de contrôle d'accès prédéterminé pour l'accès au réseau virtuel, d'autorisation de transfert, si le client n'est pas compatible avec le protocole de contrôle d'accès prédéterminé, de données entre le client non compatible et au moins un système d'abonnement du client à au moins un fournisseur de services par l'intermédiaire d'un réseau d'accréditation différent du ou de chaque réseau virtuel permettant à un client d'accéder aux services du ou de chaque fournisseur de services et de transfert au client non compatible, si le client non compatible s'abonne à au moins un fournisseur de services par l'intermédiaire d'un réseau d'accréditation, d'une accréditation pour accéder au réseau virtuel permettant d'accéder aux services du fournisseur de services auquel le client non compatible est abonné et d'informations permettant de rendre compatible, le client avec le protocole de contrôle d'accès prédéterminé.

Corrélativement, l'invention concerne un système d'accréditation d'un client pour l'accès à au moins un réseau virtuel permettant au client d'accéder aux services d'au moins un fournisseur de services, le ou chaque réseau virtuel étant établi sur un réseau de télécommunication, caractérisé en ce qu'il comporte des moyens de détermination de la compatibilité du client avec un protocole de contrôle d'accès prédéterminé pour l'accès au réseau de télécommunication, des moyens d'autorisation de transfert, si le client n'est pas compatible avec le protocole de contrôle d'accès prédéterminé, de données entre le client non compatible et au moins un système d'abonnement du client à au moins un fournisseur de services par l'intermédiaire d'un réseau différent des réseaux virtuels permettant à un client d'accéder aux services d'un fournisseur de services et des moyens de transfert au client non compatible, si le client non compatible s'abonne à au moins un fournisseur de services, d'une accréditation pour accéder au réseau virtuel permettant d'accéder aux services du fournisseur de services auquel le client non compatible est abonné et d'informations permettant de rendre compatible le client avec le protocole de contrôle d'accès prédéterminé.

Ainsi, les clients disposant d'équipements et de logiciels variés peuvent accéder à un ou plusieurs réseaux virtuels pour s'abonner à un fournisseur de service de manière automatique et cela même si ceux-ci ne disposent pas de logiciels compatibles avec le mécanisme de contrôle d'accès utilisé dans le réseau de télécommunication.

Selon un autre aspect de l'invention, le réseau d'accréditation est un réseau virtuel ou un réseau distinct du réseau de télécommunication.

Selon un autre aspect de l'invention, le système d'abonnement est constitué d'au moins un portail d'abonnement, d'un serveur de matériel d'authentification et lorsque le client s'abonne à un service, le portail d'abonnement transfère à un serveur d'authentification des données associées à l'accréditation transférée au client.

Selon un autre aspect de l'invention, le client est relié au réseau par l'intermédiaire d'un multiplexeur numérique de lignes de clients et si le client est compatible avec le protocole de contrôle d'accès prédéterminé, le multiplexeur numérique de lignes de clients obtient un identifiant et un matériel d'authentification du client ainsi qu'une confirmation de l'accréditation du client par le serveur d'authentification.

Ainsi, il est possible de vérifier si un client est autorisé ou non à accéder à un fournisseur de services et d'éviter ainsi tout accès à des services non autorisés au client.

Selon un autre aspect de l'invention, si le serveur d'authentification ne confirme pas l'accréditation du client, on autorise le transfert de données entre le client et au moins un système d'abonnement du client à au moins un fournisseur de services par l'intermédiaire d'un réseau d'accréditation différent des réseaux virtuels permettant à un client d'accéder aux services d'au moins un fournisseur de services.

Ainsi, un client ne disposant pas d'un matériel d'authentification valide peut néanmoins accéder à un système d'abonnement en vue d'obtenir un matériel d'authentification valide.

Selon un autre aspect de l'invention, des informations associées au fournisseur de services auquel le client est abonné et/ou des informations caractérisant le service auquel le client est abonné sont aussi transférées au serveur d'authentification

Ainsi, toutes les informations nécessaires à la détermination des services auxquels le client peut accéder ainsi que le ou les débits choisis par le client lors de son abonnement sont mémorisés en un unique serveur. Il est alors possible de catégoriser les offres offertes par les fournisseurs de services et de garantir que ces offres soient respectées. De plus, lorsque des confirmations d'accréditation sont envoyées au serveur d'accréditation, celui-ci peut en même temps fournir d'autres informations nécessaires à la définition des droits du client.

Selon un autre aspect de l'invention, le multiplexeur numérique de lignes de clients autorise le transfert de données entre le réseau virtuel permettant au client d'accéder aux services du fournisseur de services auquel le client est abonné selon le ou les débits de communication auquel le client est abonné.

Ainsi, toute modification des débits de communication alloués au client est effectuée de manière automatique.

Selon un autre aspect de l'invention, au réseau virtuel d'accréditation est aussi associé un serveur d'adresses et le serveur d'adresses alloue une adresse au client pour le transfert de données sur le réseau virtuel d'accréditation.

Ainsi, le client peut obtenir une adresse dans le réseau de télécommunication lui permettant ensuite de s'abonner aux services fournis par un fournisseur de services.

Selon un autre aspect de l'invention, le réseau de télécommunication est un réseau de type GigaEthernet et le protocole de contrôle d'accès prédéterminé est un protocole de type IEEE 802.1x et les clients sont reliés au multiplexeur numérique de lignes de clients par l'intermédiaire de liaisons de type DSL.

L'invention concerne aussi les programmes d'ordinateurs stockés sur un support d'informations, lesdits programmes comportant des instructions permettant de mettre en oeuvre le procédé d'accréditation précédemment décrit, lorsqu'il est chargé et exécuté par un système informatique.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 représente l'architecture du système d'accréditation d'un client pour l'accès à un réseau de télécommunication permettant au client d'accéder à des services fournis par des fournisseurs de services ;
la Fig. 2 représente un schéma bloc du multiplexeur numérique de lignes de clients de la présente invention ;
la Fig. 3 représente l'algorithme d'accréditation d'un client pour l'accès à un réseau de télécommunication permettant au client d'accéder à des services fournis par des fournisseurs de services.

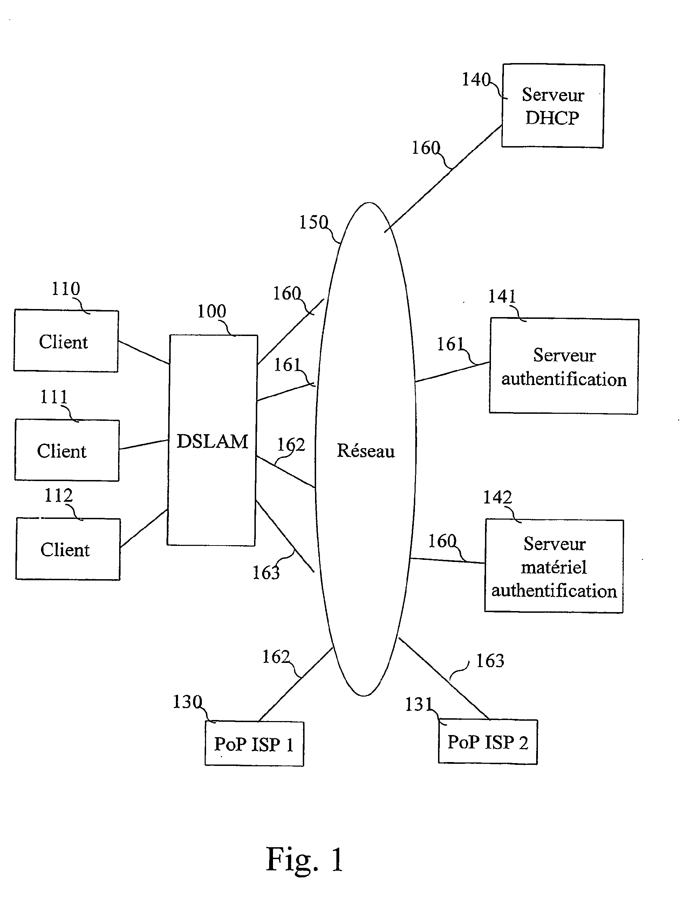

La **Fig. 1** représente l'architecture du système d'accréditation d'un client pour l'accès à un réseau de télécommunication permettant au client d'accéder à des services fournis par des fournisseurs de services.

Le système d'accréditation d'un client à un réseau de télécommunication comprend un multiplexeur numérique de lignes de clients 100. Le multiplexeur numérique de lignes de clients 100 est dans un mode préféré un multiplexeur numérique de lignes de clients adapté à des liaisons point à point avec des clients 110 111 et 112. Lorsque les liaisons sont de type DSL, le multiplexeur numérique de lignes de clients 100 est connu sous le terme DSLAM. DSLAM est l'acronyme de « Digital Subscriber Line Access Multiplexor ».

Le multiplexeur numérique de lignes de clients 100 a pour fonction de regrouper plusieurs lignes de clients 110, 111 et 112 sur un support physique qui assure le transport des données échangées entre les clients 110, 111 et 112 et des fournisseurs de services 130 et 131. Un client est par exemple un dispositif de télécommunication tel qu'un ordinateur comprenant une carte de communication adaptée à la liaison existant avec le multiplexeur numérique de lignes de clients 100 ou un ordinateur relié à un dispositif de communication externe adaptée à la liaison existant avec le multiplexeur numérique de lignes de clients 100.

Les clients 110, 111 et 112 sont plus précisément des terminaux de télécommunication et sont reliés au multiplexeur numérique de lignes de clients 100 par l'intermédiaire du réseau téléphonique filaire et utilisent les techniques de modulation de type DSL. Bien entendu d'autres types de liaisons point à point peuvent être utilisées. Par exemple et de manière non limitative, ces liaisons peuvent être aussi des liaisons sans fils ou des liaisons par fibres optiques. Le multiplexeur numérique de lignes de clients 100 autorise l'accès aux services proposés par les fournisseurs de services 130 et 131 par exemple aux clients 111 et 112 si ceux-ci sont compatibles avec un protocole de contrôle d'accès tel que par exemple le protocole IEEE 802.1x et si ceux-ci sont enregistrés dans une base de données associée à leur fournisseur de services 130 ou 131 et si l'authentification de ceux-ci a été validée par un serveur d'authentification 141 associé à leur fournisseur de services 130 ou 131. Pour cela, le multiplexeur numérique de lignes de clients 100 comprend un module logiciel client qui émet des requêtes d'authentification à un serveur 141 lorsqu'un client 110, 111 ou 112 désire accéder aux services proposés par un fournisseur de services relié au réseau 150. Le module logiciel client est préférentiellement un module logiciel client RADIUS c'est-à-dire conforme au protocole RADIUS et le serveur 141 est préférentiellement un serveur d'authentification de type RADIUS lui aussi conforme au protocole RADIUS. RADIUS est l'acronyme de « Remote Authentication Dial In User Service ». Il est à remarquer ici que d'autres types de protocole d'authentification peuvent être utilisés dans la présente invention. Ces protocoles sont par exemple et de manière non limitative de type « Diameter » ou de type « TACACS » ® acronyme de « Terminal Access Controller Access Control System » ou protocole d'authentification utilisant un serveur d'authentification.

Le multiplexeur numérique de lignes de clients 100 autorise, à un client tel que le client 110, l'accès à un système d'abonnement 142 à un fournisseur de services 130 ou 131 lorsque que le client 110 ne dispose pas d'un logiciel compatible avec le protocole de contrôle d'accès tel que par exemple le protocole IEEE 802.1x. Le système d'abonnement 142, via le multiplexeur numérique de lignes de clients 100, transfère à un client non compatible avec le protocole de contrôle d'accès les données lui permettant de se rendre compatible avec le protocole de contrôle d'accès lorsque l'enregistrement du client a été validé par le serveur d'authentifcation 141 associé à un fournisseur de services 130 ou 131.

Dans le protocole IEEE 802.1x, trois éléments composent l'architecture de contrôle d'accès. Le « supplicant » est l'élément qui tente d'accéder au réseau en y demandant un accès. « L'authenticator » est l'élément qui assure le relais des informations liées à l'authentification du «supplicant» vers le serveur d'authentification ou « authentication server ». Le serveur d'authentification est l'élément qui valide l'accès du « supplicant » au réseau. Les informations sont échangées entre « l'authenticator » et « l'authentication server » conformément au protocole EAP, acronyme de « Extensible Authentication Protocol » lui-même encapsulé dans le protocole Radius. Les informations échangées entre le « supplicant » et « l'authenticator » sont conformes au protocole EAPOL, acronyme de « EAP Over Lan ». Le « supplicant » est par exemple le client 111, « l'authenticator » est le multiplexeur numérique de lignes de clients 100 et « l'authentication server » est le serveur d'authentification RADIUS 141 de la Fig. 1

Le multiplexeur numérique de lignes de clients 100 est relié aux fournisseurs de services 130 et 131 par l'intermédiaire de points de présence PoP non représentés en Fig. 1. Les fournisseurs de services 130 et 131 offrent différents services à leurs abonnés respectifs. Ces services sont par exemple et de manière non limitative des services d'accès à Internet, des services de vidéo à la demande, des services de courrier électronique, des services de téléphonie sur le réseau Internet, des services de visioconférence sur Internet, etc.... Le multiplexeur numérique de lignes de clients 100 est aussi relié à un serveur DHCP 140, à un serveur d'authentification RADIUS 141 et à un serveur de matériel d'authentification 142 par l'intermédiaire d'un réseau de télécommunication 150. Le réseau de télécommunication 150 est par exemple un réseau de type GigaEthernet. Des réseaux virtuels sont établis sur le réseau de télécommunication 150 entre le multiplexeur numérique de lignes de clients 100 et chaque fournisseur de services 130 et 131. Un réseau, distinct des réseaux virtuels précédemment mentionnés est aussi établi pour l'accès au système d'abonnement à un fournisseur de services par un client qui n'est pas compatible avec le protocole IEEE 802.1x. Le réseau établi dans le réseau de télécommunication 150 pour l'accès au système d'abonnement à un fournisseur de services par un client qui n'est pas compatible avec le protocole IEEE 802.1x est un réseau physique distinct du réseau de télécommunication 150 ou un réseau virtuel établi sur le réseau de télécommunication 150. Les réseaux virtuels ou VLAN, acronyme de « Virtual Local Area Network » permettent de catégoriser les clients et ainsi de limiter les ressources auxquelles ils ont accès. Par exemple, si le client 111 est client du fournisseur de services 130, les échanges entre le client 111 et le fournisseur de services 130 sont effectués par l'intermédiaire du VLAN symbolisé par les liaisons notées 162 en Fig. 1. Le client 111 par contre ne peut accéder aux services proposés par le fournisseur de services 131 car celui-ci est associé à un autre VLAN noté 163 différent du VLAN 162.

Le serveur DHCP 140 distribue des adresses IPv4 aux clients, par exemple au client 110 lorsqu'il souhaite s'abonner aux services proposés par un des fournisseurs de services 130 ou 131. DHCP est l'acronyme de « Dynamic Host Configuration Protocol ». Il est à remarquer ici que le serveur DHCP peut en variante distribuer des adresses de type IPv6 lorsque ce protocole est utilisé.

Le serveur d'authentification 141 est le serveur d'authentification ou « authentication server » selon le protocole IEEE 802.1x et est dans un mode préféré de réalisation conforme au protocole RADIUS. Le serveur d'authentification RADIUS 141 authentifie un client, par exemple le client 111 auprès du multiplexeur numérique de lignes de clients 100 lorsque le client 111 désire accéder au fournisseur de services 130. Nous entendons ici comme authentification d'un client aussi bien l'authentification du dispositif client 110 ou de l'utilisateur du dispositif client. Cette authentification est effectuée à partir de l'identifiant du client tel que son nom d'utilisateur et la fourniture par le client d'un mot de passe ou d'un matériel d'authentification validé par le serveur d'authentification 141. A la réception de cette confirmation, le multiplexeur numérique de lignes de clients 100 autorise le transfert de données entre le client 111 et le fournisseur de services 130 par l'intermédiaire du réseau virtuel 162 si le client 111 s'est préalablement abonné aux services proposés par le fournisseur de services 130. De la même façon, le serveur d'authentification RADIUS 141 authentifie le client 112 auprès du multiplexeur numérique de lignes de clients 100 lorsque le client 112 désire accéder aux services proposés par le fournisseur de services 131. A la réception de cette confirmation, le multiplexeur numérique de lignes de clients 100 autorise le transfert de données entre le client 112 et le fournisseur de services 131 par l'intermédiaire du réseau virtuel 163 si le client 112 s'est préalablement abonné aux services proposés par le fournisseur de services 131.

Un réseau virtuel noté 161 est aussi dédié au transport des données d'authentification entre le multiplexeur numérique de lignes de clients 100 et le serveur d'authentification RADIUS 141.

Le serveur d'authentification RADIUS 141 comporte aussi les attributs associés aux clients reliés au multiplexeur numérique de lignes de clients 100. Ces attributs sont par exemple, le ou les réseaux virtuels auxquels le client 110, 111 ou 112 a le droit d'accéder ainsi que d'autres informations telles que par exemple le débit de transfert de données souscrit par le client ou le ou les fournisseurs de services auxquels le client est abonné, le type d'applications hébergées par le client, etc. Au serveur d'authentification RADIUS 141 est associée une base de données clients qui mémorise tous les clients pouvant accéder aux services proposés par les différents fournisseurs de services 130 et 131 reliés au réseau 150, les attributs constituant le profil d'un client 111 ou 112, ainsi qu'un identifiant de chaque client 111 ou 112. A cet identifiant est associé un mot de passe ou un matériel d'authentification délivré par un serveur de matériel d'authentification 142.

Dans un mode particulier de réalisation, le serveur de matériel d'authentification 142 assure en outre la fonction de portail d'abonnement et lorsqu'un client accède à ce portail, le client 110 peut s'abonner à un service proposé par un des fournisseurs de services 130 ou 131 associés au réseau.

Lorsqu'un client, par exemple le client 110, ne dispose pas d'un logiciel compatible avec le protocole de contrôle d'accès tel que par exemple le protocole IEEE 802.1x, celui-ci est autorisé à accéder au réseau d'accréditation 160. Le réseau d'accréditation 160 est par exemple un réseau virtuel 160. Au réseau virtuel 160 sont reliés un serveur DHCP 140 et un serveur de matériel d'authentification 142. Par l'intermédiaire du serveur DHCP 140, le client 110 qui ne dispose pas de logiciel compatible avec le protocole IEEE 802.x obtient une adresse et peut ainsi établir une communication avec le serveur de matériel d'authentification 142 et s'abonner aux services proposés par un ou plusieurs fournisseurs de services 130 et/ou 131.

Il est à remarquer ici que le serveur d'authentification RADIUS 141, accessible par l'intermédiaire du réseau virtuel 161, peut aussi être en variante un proxy serveur d'authentification RADIUS qui redirige les informations transférées vers des serveurs d'authentification RADIUS non représentés en Fig. 1 associés à chaque fournisseur de services 130 et 131. Selon cette variante, chaque serveur d'authentification Radius associé à chaque fournisseur 130 et 131 de services mémorise tous les clients pouvant accéder aux services proposés par le fournisseur de services auquel il est associé ainsi que les attributs constituant le profil d'un client, l'identifiant de chaque client et le mot de passe ou le matériel d'authentification délivré par le serveur de matériel d'authentification 142.

Il est à remarquer aussi que le serveur DHCP 140 accessible par l'intermédiaire du réseau virtuel 160 peut aussi être en variante un serveur relais ou « proxy » DHCP qui redirige les informations transférées vers des serveurs DHCP (non représentés en Fig. 1) associés à chaque fournisseur de services 130 et 131.

Un proxy est un équipement qui reçoit des informations d'un premier dispositif de télécommunication et transfère celles-ci vers un second dispositif de télécommunication, et réciproquement qui reçoit des informations du second dispositif de télécommunication et transfère celles-ci vers le premier dispositif de télécommunication.

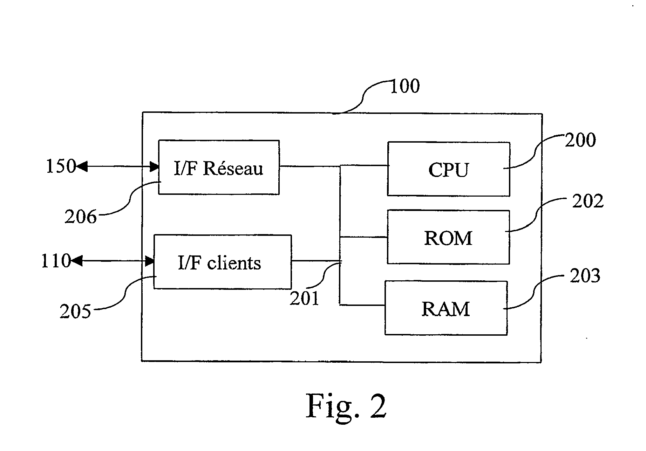

La **Fig. 2** représente un schéma bloc du multiplexeur numérique de lignes de clients de la présente invention.

Le multiplexeur numérique de lignes de clients 100 comporte un bus de communication 201 auquel sont reliées une unité centrale 200, une mémoire non volatile 202, une mémoire vive 203, une interface clients 205 et une interface réseau 206.

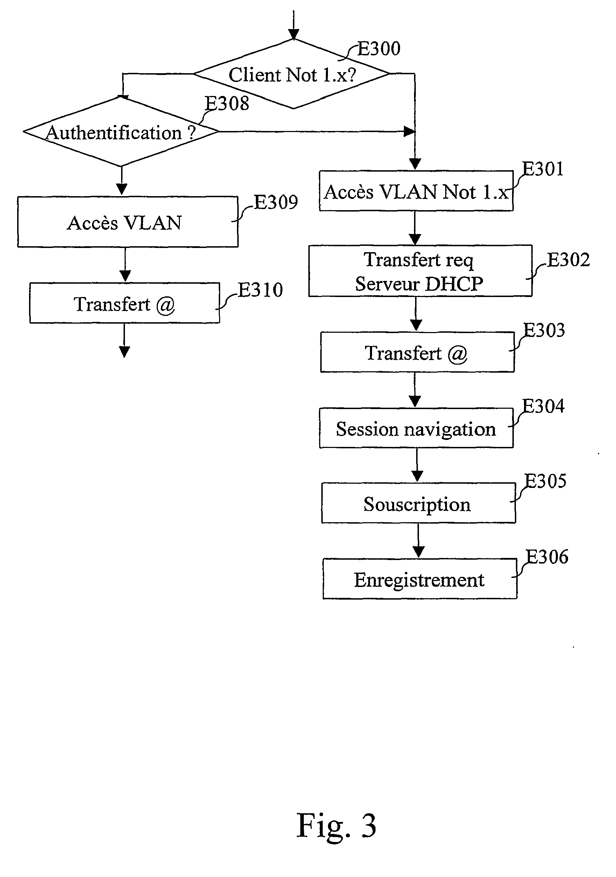

La mémoire non volatile 202 mémorise les programmes mettant en oeuvre l'invention tel que le module logiciel RADIUS client et au moins une partie de l'algorithme qui sera décrit ultérieurement en référence à la Fig. 3. La mémoire non volatile 202 est par exemple un disque dur. De manière plus générale, les programmes selon la présente invention sont mémorisés dans un moyen de stockage. Ce moyen de stockage est lisible par un ordinateur ou un microprocesseur 200. Ce moyen de stockage est intégré ou non au multiplexeur numérique de lignes de clients 100, et peut être amovible. Lors de la mise sous tension du multiplexeur numérique de lignes de clients 100, les programmes sont transférés dans la mémoire vive 203 qui contient alors le code exécutable de l'invention ainsi que les données nécessaires à la mise en oeuvre de l'invention.

Le multiplexeur numérique de lignes de clients 100 comporte aussi une interface réseau de télécommunication 206. Cette interface permet les transferts de données entre les fournisseurs de services 130 et 131 et/ou le serveur DHCP 140 et/ou le serveur d'authentification RADIUS 141 et/ou le serveur de matériel d'authentification 142.

Le multiplexeur numérique de lignes de clients 100 comporte aussi une interface clients 205. Cette interface est dans un mode préféré de réalisation une interface de type DSL. L'interface clients 205 comporte pour chaque client 110, 111 et 112 un port dédié aux communications point à point entre le multiplexeur numérique de lignes de clients 100 et le client connecté à ce port.

Le processeur 200 est apte à autoriser ou non le transfert de données entre l'interface réseau de télécommunication 206 et chaque port de l'interface clients 205 relié à un client en fonction de l'accréditation du client.

Selon le mode préféré de réalisation la liaison entre le multiplexeur numérique de lignes de clients 100 et chaque client 110, 111 et 112 est une liaison filaire utilisant la ligne téléphonique respective des clients 110, 111, 112. Bien entendu, d'autres liaisons telles que des liaisons de type coaxiales, radio ou par fibres optiques peuvent être aussi utilisées en variante.

La **Fig. 3** représente l'algorithme d'accréditation d'un client pour l'accès à un réseau de télécommunication permettant au client d'accéder à des services fournis par des fournisseurs de services.

A l'étape E300, le processeur 200 du multiplexeur numérique de lignes de clients 100 détecte une demande de connexion d'un client au réseau de télécommunication permettant au client d'accéder à des services fournis par des fournisseurs de services. A cette étape le processeur 200 vérifie si le client est compatible avec le protocole de contrôle d'accès tel que par exemple le protocole IEEE 802.1x. Ceci est par exemple déterminé en vérifiant si les informations transmises par le client 110 sont conformes au protocole EAPOL. Plus précisément, le processeur 200 vérifie si le client est compatible avec le protocole IEEE 802.1x en vérifiant si celui-ci transmet ou est apte à répondre à une trame de type EAPoL-Start du protocole IEEE 802.1x. Dans l'affirmative, le processeur 200 passe à l'étape E308. Dans la négative, le processeur 200 passe à l'étape E301.

A l'étape E301, le processeur 200 ayant déterminé que le client n'est pas compatible avec le protocole IEEE 802.1x considère celui-ci comme un nouveau client et autorise le nouveau client, par exemple le client 110 à accéder à un réseau virtuel prédéterminé. A ce réseau virtuel ou VLAN noté 160 en Fig. 1, est relié un système d'abonnement. Ce système d'abonnement comprend un serveur DHCP 140 ainsi qu'un serveur de matériel d'authentification 142. Le client 110 peut alors établir des communications avec le serveur DHCP 140 ainsi que le serveur de matériel d'authentification 142. Ce réseau virtuel 160 est dédié aux clients qui ne disposent pas de la fonctionnalité 802.1x ou aux clients ne disposant d'un matériel d'authentification valide.

Cette opération effectuée, le client 110 demande à l'étape E302 une adresse telle que par exemple une adresse IP au serveur DHCP 140 par l'intermédiaire du multiplexeur numérique de lignes de clients 100 et du réseau virtuel 160.

Cette adresse IP est transférée au client 110 à l'étape E303.

A la réception de cette adresse IP, le client 110 lance à l'étape E304 une session de navigation à l'aide d'un navigateur du terminal de télécommunication et une connexion est établie avec un portail d'abonnement. Le portail d'abonnement est préférablement intégré au serveur de matériel d'authentification 142. Bien entendu, le portail d'abonnement peut être distinct du serveur de matériel d'authentification 142 mais doit dans ce cas être relié au réseau virtuel 160 Dans le cas où le portail d'abonnement est distinct du serveur de matériel d'authentification 142, le serveur de matériel d'authentification 142 n'est pas nécessairement relié au réseau virtuel 160. Dans ce cas, le portail d'abonnement communique directement ou indirectement avec le serveur de matériel d'authentification 142. Il est à noter que, selon cette architecture, lorsque chaque fournisseur de services 130 ou 131 dispose d'un portail d'abonnement, chaque portail d'abonnement doit alors être relié au réseau virtuel 160. En variante, l'ensemble des serveurs de matériel d'authentification de chacun des fournisseurs de services peut être accessible à partir d'un portail d'abonnement unique géré par l'un des fournisseurs de services.

A l'étape E305, le client 110 souscrit à un service proposé par un des fournisseurs de services 130 ou 131. Le client 110 sélectionne le fournisseur de services ainsi que le débit qu'il souhaite avoir. De manière générale, le client 110 choisit parmi un ensemble de services proposés par le fournisseur de services sélectionné, le ou les services dont il souhaite disposer. Nous entendons ici par souscription d'un client à un service proposé par un des fournisseurs de services 130 ou 1311a souscription de l'utilisateur du dispositif client 100 à un service proposé par un des fournisseurs de services 130 ou 131.

A l'étape suivante E306, un enregistrement du client 110 est effectué. Cèt enregistrement consiste en une mise à jour de la base de données client associée au serveur d'authentification RADIUS 141 par le serveur de matériel d'authentification 142 comprenant le portail d'abonnement. Sont alors mémorisés un identifiant du client 110 associé à un mot de passe ou à un matériel d'authentification tel qu'un certificat, et les données associées au(x) service(s) au(x)quel(s) le client a souscrit. Si par exemple le client 110 a souscrit un abonnement au fournisseur de services 130, celui-ci sera alors autorisé à accéder au réseau virtuel 162 comme tous les clients du fournisseur de services 130. A cette étape, sont aussi transférés au client 110 un identifiant et un mot de passe ou un matériel d'authentification ainsi que les informations permettant de rendre le client 110 compatible avec le protocole 802.1x. Ces informations sont par exemple une commande pour l'activation du logiciel 802.1x « supplicant » lorsque celui-ci est déjà présent dans le dispositif de communication du client 110 ou un message visuel et/ou sonore d'invitation du client 110 à activer le logiciel 802.1x ou le chargement du logiciel 802.1x « supplicant » ainsi que son installation et son activation dans le dispositif de communication du client 110.

Cette opération effectuée, le processeur 200 retourne à l'étape E300. Le processeur 200 détecte une nouvelle demande de connexion du client 110 au réseau de télécommunication permettant au client d'accéder à des services fournis par des fournisseurs de services.

A cette étape le processeur 200 vérifie si le client est compatible avec le protocole de contrôle d'accès tel que par exemple le protocole IEEE 802.1x. Le client 110 étant devenu compatible à l'étape E306 précédente, le processeur 200 passe à l'étape E308.

A cette étape, une vérification de l'accréditation du client est effectuée. Pour cela le multiplexeur numérique de lignes de clients 100 reçoit du dispositif de communication du client 110 un identifiant et un mot de passe ou un matériel d'authentification.

Le processeur 200 du multiplexeur numérique de lignes de clients 100 commande le transfert d'une requête de confirmation d'enregistrement à destination du serveur d'authentification, par exemple le serveur RADIUS 141, par l'intermédiaire du réseau virtuel 161. Le serveur d'authentification RADIUS 141 recherche dans la base de données des clients si le client 110 est compris dans la base de données des clients, vérifie la validité du mot de passe ou du matériel d'authentification et, dans l'affirmative, transfère au multiplexeur numérique de lignes de clients 100 une confirmation de l'enregistrement du client 110 ainsi que le profil associé au client 110 qui comprend des informations telles que le réseau virtuel auquel l'accès du client 110 est autorisé, le débit devant être alloué au client 110, etc.... Si l'enregistrement du client 110 est confirmée, le processeur 200 passe à l'étape E309.

Si l'enregistrement du client 110 n'est pas confirmé, le processeur 200 du multiplexeur numérique de lignes de clients 100 autorise le transfert de données entre le client 110 et au moins un système d'abonnement du client à au moins un fournisseur de services par l'intermédiaire du réseau virtuel 160 dédié aux clients qui ne disposent pas de la fonctionnalité 802.1x ou qui ne disposent pas de matériel d'authentification valide. Pour cela, le processeur 200 passe à l'étape E301 précédemment décrite.

A l'étape suivante E309, le processeur 200 du multiplexeur numérique de lignes de clients 100 autorise l'accès au réseau virtuel auquel l'accès du client 110 est autorisé après application de l'ensemble des paramètres caractérisant le service auquel le client a souscrit tels que par exemple le débit devant être alloué à ce service, la priorité du service et/ou la qualité associée au service.

A l'étape suivante E310, si le client 110 ne dispose pas d'une adresse IP allouée préalablement par le fournisseur de services auquel il est abonné, une adresse IP permettant au client 110 d'accéder au service souscrit est allouée par un serveur DHCP associé au fournisseur de services auquel a souscrit le client 110.

Le client 110 peut ainsi accéder à des services fournis par le fournisseur de services 130 ou 131 auquel il est abonné.

Bien entendu, la présente invention n'est nullement limitée aux modes de réalisation décrits ici, mais englobe, bien au contraire, toute variante à la portée de l'homme du métier.

## Revendications

1. Procédé d'accréditation d'un client (110, 111, 112) pour l'accès à au moins un réseau virtuel (162,163) permettant au client d'accéder aux services d'au moins un fournisseur de services (130,131), le au moins un réseau virtuel étant établi sur un réseau de télécommunication (150), **caractérisé en ce que** le procédé comporte les étapes de :
- détermination de la compatibilité (E300) du client avec un protocole de contrôle d'accès prédéterminé pour l'accès au réseau virtuel,
- si le client n'est pas compatible avec le protocole de contrôle d'accès prédéterminé, autorisation (E301) de transfert de données entre le client et au moins un système d'abonnement (140,142) du client audit au moins un fournisseur de services par l'intermédiaire d'un réseau d'accréditation (160) différent dudit au moins un réseau virtuel (162,163) permettant à un client d'accéder aux services dudit au moins un fournisseur de services,
- si le client non compatible s'abonne à au moins un fournisseur de services par l'intermédiaire du réseau d'accréditation (160), transfert (E306) au client non compatible d'une accréditation pour accéder au réseau virtuel (162,163) permettant d'accéder aux services du fournisseur de services (130,131) auquel le client non compatible est abonné et d'informations permettant de rendre le client compatible avec le protocole de contrôle d'accès prédéterminé.

2. Procédé selon la revendication 1, **caractérisé en ce que** le réseau d'accréditation (160) est un réseau virtuel ou un réseau distinct du réseau de télécommunication.

3. Procédé selon la revendication 1 ou 2, **caractérisé en ce que** le système d'abonnement est constitué d'au moins un portail d'abonnement (140), d'un serveur de matériel d'authentification (140) et lorsque le client s'abonne à un service, le portail d'abonnement transfère à un serveur d'authentification (141) des données associées à l'accréditation transférée au client.

4. Procédé selon la revendication 3, **caractérisé en ce que** le client est relié au réseau par l'intermédiaire d'un multiplexeur numérique de lignes de clients (100) et si le client est compatible avec le protocole de contrôle d'accès prédéterminé, le multiplexeur numérique de lignes de clients effectue (E308) les étapes d'obtention d'un identifiant et d'un matériel d'authentification du client et d'obtention d'une confirmation de l'accréditation du client par le serveur d'authentification.

5. Procédé selon la revendication 4, **caractérisé en ce que** si le serveur d'authentification (141) ne confirme pas l'accréditation du client, le procédé comporte une étape d'autorisation de transfert (E301) de données entre le client et au moins un système d'abonnement du client à au moins un fournisseur de services par l'intermédiaire d'un réseau d'accréditation différent des réseaux virtuels permettant à un client d'accéder aux services d'au moins un fournisseur de services.

6. Procédé selon la revendication 3 ou 4, **caractérisé en ce que** des informations associées au fournisseur de services auquel le client est abonné et/ou des informations caractérisant le service auquel le client est abonné sont aussi transférées au serveur d'authentification.

7. Procédé selon la revendication 6, **caractérisé en ce que** le serveur d'authentification (141) transfère en outre au multiplexeur numérique de lignes de clients les informations associées au fournisseur de services auquel le client est client et/ou les informations sur le ou les services auquel le client est abonné.

8. Procédé selon la revendication 7, **caractérisé en ce que** le multiplexeur numérique de lignes de clients autorise le transfert de données entre le réseau virtuel permettant au client d'accéder aux services du fournisseur de services auquel le client est abonné selon le ou les débits de communication auquel le client est abonné.

9. Procédé selon l'une quelconque des revendications 1 à 8, **caractérisé en ce qu'**au réseau virtuel d'accréditation est aussi associé un serveur d'adresses (140) et **en ce que** le serveur d'adresses alloue une adresse au client pour le transfert de données sur le réseau virtuel d'accréditation (160).

10. Procédé selon l'une quelconque des revendications 1 à 9, **caractérisé en ce que** le réseau de télécommunication est un réseau à haut débit basé sur la technologie Ethernet et **en ce que** le protocole de contrôle d'accès prédéterminé est un protocole de type IEEE 802. 1x et **en ce que** les clients sont reliés au multiplexeur numérique de lignes de clients par l'intermédiaire de liaisons de type DSL.

11. Dispositif d'accréditation d'un client (110) pour l'accès à au moins un réseau virtuel (162, 163) permettant au client d'accéder aux services d'au moins un fournisseur de services (130, 131), le au moins un réseau virtuel étant établi sur un réseau de télécommunication (150), **caractérisé en ce que** le dispositif d'accréditation comporte :
- des moyens (200) de détermination de la compatibilité du client avec un protocole de contrôle d'accès prédéterminé pour l'accès au réseau de télécommunication,
- des moyens d'autorisation (200) de transfert, si le client n'est pas compatible avec le protocole de contrôle d'accès prédéterminé, de données entre le client non compatible et au moins un système d'abonnement du client audit au moins un fournisseur de services par l'intermédiaire d'un réseau (160) différent dudit au moins un réseau virtuel permettant à un client d'accéder aux services dudit au moins un fournisseur de services,
- des moyens (200) de transfert au client non compatible, si le client non compatible s'abonne à au moins un fournisseur de services par l'intermédiaire du réseau d'accréditation (160), d'une accréditation pour accéder au réseau virtuel (162, 163) permettant d'accéder aux services du fournisseur de services (130, 131) auquel le client non compatible est abonné et d'informations permettant de rendre le client compatible avec le protocole de contrôle d'accès prédéterminé.

12. Support lisible par un ordinateur ou un processeur qui comprend un programme d'ordinateur enregistré sur le support, **caractérisé en ce que** le programme comprend des instructions de code de programme pour la mise en oeuvre du procédé d'accréditation selon l'une quelconque des revendications 1 à 10 lorsque ledit programme est chargé et exécuté par un ordinateur ou un processeur.

13. Multiplexeur numérique de lignes de clients (100) permettant à au moins un client (110) d'accéder aux services d'au moins un fournisseur de services (130, 131), le au moins un réseau virtuel étant établi sur un réseau de télécommunication (150), **caractérisé en ce que** le multiplexeur de lignes de clients (100) comporte :
- des moyens (200) de détermination de la compatibilité du client avec un protocole de contrôle d'accès prédéterminé pour l'accès au réseau de télécommunication,
- des moyens d'autorisation (200) de transfert, si le client n'est pas compatible avec le protocole de contrôle d'accès prédéterminé, de données entre le client non compatible et au moins un système d'abonnement du client audit au moins un fournisseur de services par l'intermédiaire d'un réseau (160) différent dudit au moins un réseau virtuel permettant à un client d'accéder aux services dudit au moins un fournisseur de services,
- des moyens (200) de transfert au client non compatible, si le client non compatible s'abonne à au moins un fournisseur de services par l'intermédiaire du réseau d'accréditation (160), d'une accréditation pour accéder au réseau virtuel (162, 163) permettant d'accéder aux services du fournisseur de services (130, 131) auquel le client non compatible est abonné et d'informations permettant de rendre le client compatible avec le protocole de contrôle d'accès prédéterminé.

14. Multiplexeur selon la revendication 13, **caractérisé en ce que** les moyens (200) de détermination de la compatibilité du client avec un protocole de contrôle d'accès sont conformes à la norme IEEE 802.1 x.

## Claims

1. Method for accreditation of a customer (110, 111, 112) for access to at least one virtual network (162, 163) allowing the customer to access the services of at least one service provider (130, 131), the at least one virtual network being established on a telecommunication network (150), **characterized in that** the method comprises the steps of:
- determination of the compatibility (E300) of the customer with a predetermined access control protocol for access to the virtual network,
- if the customer is not compatible with the predetermined access control protocol, authorization (E301) of data transfer between the customer and at least one subscription system (140, 142) of the customer to at least one service provider via an accreditation network (160) that differs from said at least one virtual network (162, 163) allowing a customer to gain access to the services of said at least one service provider
- if the incompatible customer subscribes to at least one service provider via the accreditation network (160), transfer (E306) to the incompatible customer of an accreditation for accessing the virtual network (162, 163) making it possible to access the services of the service provider (130, 131) to which the incompatible customer is subscribed and of information making it possible to make the customer compatible with the predetermined access control protocol.

2. Method according to Claim 1, **characterized in that** the accreditation network (160) is a virtual network or a network separate from the telecommunication network.

3. Method according to Claim 1 or 2, **characterized in that** the subscription system consists of at least one subscription portal (140), of an authentication hardware server (140) and, when the customer subscribes to a service, the subscription portal transfers to an authentication server (141) data associated with the accreditation transferred to the customer.

4. Method according to Claim 3, **characterized in that** the customer is connected to the network via a customer-line digital multiplexer (100) and, if the customer is compatible with the predetermined access control protocol, the customer-line digital multiplexer carries out (E308) the steps of obtaining an identifier and an item of hardware for authentification of the customer and for obtaining a confirmation of the accreditation of the customer by the authentication server.

5. Method according to Claim 4, **characterized in that**, if the authentication server (141) does not confirm the accreditation of the customer, the method comprises a step of authorizing transfer (E301) of data between the customer and at least one subscription system of the customer to at least one service provider via an accreditation network that differs from the virtual networks allowing a customer to gain access to the services of at least one service provider.

6. Method according to Claim 3 or 4, **characterized in that** information associated with the service provider to which the customer is subscribed and/or information characterizing the service to which the customer is subscribed is also transferred to the authentication server.

7. Method according to Claim 6, **characterized in that** the authentication server (141) also transfers to the customer-line digital multiplexer the information associated with the service provider to which the customer is subscribed and/or the information on the service or services to which the customer is subscribed.

8. Method according to Claim 7, **characterized in that** the customer-line digital multiplexer authorizes the transfer of data between the virtual network allowing the customer to gain access to the services of the service provider to which the customer is subscriber according to the communication bit rate(s) to which the customer is subscribed.

9. Method according to any one of Claims 1 to 8, **characterized in that** also associated with the accreditation virtual network is an address server (140), and **in that** the address server allocates an address to the customer for the transfer of data over the accreditation virtual network (160).

10. Method according to any one of the preceding Claims 1 to 9, **characterized in that** the telecommunication network is a high-speed network based on the Ethernet technology and **in that** the predetermined access control protocol is a protocol of the IEEE 802.1x type and **in that** the customers are connected to the customer-line digital multiplexer via links of the DSL type.

11. Device for accreditation of a customer (110) for access to at least one virtual network (162, 163) allowing the customer to gain access to the services of at least one service provider (130, 131), the at least one virtual network being established on a telecommunication network (150), **characterized in that** the accreditation device comprises:
- means (200) for determining the compatibility of the customer with a predetermined access control protocol for access to the telecommunication network,
- authorization means (200) for transferring, if the customer is not compatible with the predetermined access control protocol, data between the incompatible customer and at least one subscription system of the customer to the at least one service provider via a network (160) that differs from said at least one virtual network allowing a customer to gain access to the services of said at least one service provider,
- means (200) for transfer to the incompatible customer, if the incompatible customer is subscribed to at least one service provider via the accreditation network (160), of an accreditation in order to gain access to the virtual network (162, 163) making it possible to gain access to the services of the service provider (130, 131) to which the incompatible customer is subscribed and of information making it possible to make the customer compatible with the predetermined access control protocol.

12. Computer-readable medium or a processor which comprises a computer program stored on the medium, **characterized in that** the program comprises program code instructions for applying the accreditation method according to any one of Claims 1 to 10, when said program is loaded and run by a computer or a processor.

13. Customer-line digital multiplexer (100) allowing at least one customer (110) to gain access to the services of at least one service provider (130, 131) the at least one virtual network being established on a telecommunication network (150), **characterized in that** the customer-line multiplexer (100) comprises:
- means (200) for determining the compatibility of the customer with a predetermined access control protocol for access to the telecommunication network,
- authorization means (200) for transferring, if the customer is not compatible with the predetermined access control protocol, data between the incompatible customer and at least one subscription system of the customer to said at least one service provider via a network (160) that differs from said at least one virtual network allowing a customer to gain access to the services of said at least one service provider,
- means (200) for transfer to the incompatible customer, if the incompatible customer is subscribed to at least one service provider via the accreditation network (160), of an accreditation in order to gain access to the virtual network (162, 163) making it possible to gain access to the services of the service provider (130, 131) to which the incompatible customer is subscribed and of information making it possible to make the customer compatible with the predetermined access control protocol.

14. Multiplexer according to Claim 13, **characterized in that** the means (200) for determining the compatibility of the customer with an access control protocol comply with the IEEE 802.1x standard.

## Patentansprüche

1. Verfahren zur Akkreditierung eines Kunden (110, 111, 112) für den Zugriff auf mindestens ein virtuelles Netzwerk (162, 163), das es dem Kunden ermöglicht, auf die Dienste mindestens eines Diensteanbieters (130, 131) zuzugreifen, wobei das mindestens eine virtuelle Netzwerk in einem Telekommunikationsnetzwerk (150) erstellt wird, **dadurch gekennzeichnet, dass** das Verfahren die folgenden Schritte aufweist:
- Bestimmung der Kompatibilität (E300) des Kunden mit einem vorbestimmten Zugriffskontrollprotokoll für den Zugriff auf das virtuelle Netzwerk,
- wenn der Kunde nicht mit dem vorbestimmten Zugriffskontrollprotokoll kompatibel ist, Genehmigung (E301) einer Datenübertragung zwischen dem Kunden und mindestens einem Abonnementsystem (140, 142) des Kunden bei dem mindestens einen Diensteanbieter über ein Akkreditierungsnetzwerk (160), das sich von dem mindestens einen virtuellen Netzwerk (162, 163) unterscheidet, das es einem Kunden ermöglicht, auf die Dienste des mindestens einen Diensteanbieters zuzugreifen,
- wenn der nicht kompatible Kunde sich bei mindestens einem Diensteanbieter über das Akkreditierungsnetzwerk (160) abonniert, Übertragung (E306) einer Akkreditierung an den nicht kompatiblen Kunden, um auf das virtuelle Netzwerk (162, 163) zuzugreifen, das es ermöglicht, auf die Dienste des Diensteanbieters (130, 131), bei dem der nicht kompatible Kunde abonniert ist, zuzugreifen, und von Informationen, die es ermöglichen, den Kunden mit dem vorbestimmten Zugriffskontrollprotokoll kompatibel zu machen.

2. Verfahren nach Anspruch 1, **dadurch gekennzeichnet, dass** das Akkreditierungsnetzwerk (160) ein virtuelles Netzwerk oder ein vom Telekommunikationsnetzwerk unterschiedliches Netzwerk ist.

3. Verfahren nach Anspruch 1 oder 2, **dadurch gekennzeichnet, dass** das Abonnementsystem aus mindestens einem Abonnement-Portal (140), einem Server von Authentifizierungsmaterial (140), besteht, und wenn der Kunde einen Dienst abonniert, überträgt das Abonnement-Portal Daten an einen Authentifizierungsserver (141), die der an den Kunden übertragenen Akkreditierung zugeordnet sind.

4. Verfahren nach Anspruch 3, **dadurch gekennzeichnet, dass** der Kunde über einen digitalen Multiplexer von Kundenleitungen (100) mit dem Netzwerk verbunden ist, und wenn der Kunde mit dem vorbestimmten Zugriffskontrollprotokoll kompatibel ist, führt der digitale Multiplexer von Kundenleitungen die Schritte des Erhalts einer Kennung und eines Authentifizierungsmaterials des Kunden und des Erhalts einer Bestätigung der Akkreditierung des Kunden durch den Authentifizierungsserver durch (E308).

5. Verfahren nach Anspruch 4, **dadurch gekennzeichnet, dass**, wenn der Authentifizierungsserver (141) die Akkreditierung des Kunden nicht bestätigt, das Verfahren einen Schritt der Genehmigung (E301) einer Datenübertragung zwischen dem Kunden und mindestens einem Abonnementsystem des Kunden bei mindestens einen Diensteanbieter über ein sich von den virtuellen Netzwerken, die einem Kunden erlauben, auf die Dienste mindestens eines Diensteanbieters zuzugreifen, unterscheidendes Akkreditierungsnetzwerk enthält.

6. Verfahren nach Anspruch 3 oder 4, **dadurch gekennzeichnet, dass** dem Diensteanbieter, bei dem der Kunde abonniert ist, zugeordnete Informationen und/oder den Dienst, den der Kunde abonniert hat, kennzeichnende Informationen auch an den Authentifizierungsserver übertragen werden.

7. Verfahren nach Anspruch 6, **dadurch gekennzeichnet, dass** der Authentifizierungsserver (141) außerdem die dem Diensteanbieter, bei dem der Kunde abonniert ist, zugeordneten Informationen und/oder die Informationen über den Dienst oder die Dienste, die der Kunde abonniert hat, an den digitalen Multiplexer von Kundenleitungen überträgt.

8. Verfahren nach Anspruch 7, **dadurch gekennzeichnet, dass** der digitale Multiplexer von Kundenleitungen die Datenübertragung zwischen dem virtuellen Netzwerk, das es dem Kunden ermöglicht, auf die Dienste des Diensteanbieters zuzugreifen, bei dem der Kunde abonniert ist, je nach den Kommunikationsdurchsätzen, die der Kunde abonniert hat, genehmigt.

9. Verfahren nach einem der Ansprüche 1 bis 8, **dadurch gekennzeichnet, dass** dem virtuellen Akkreditierungsnetzwerk auch ein Adressenserver (140) zugeordnet ist, und dass der Adressenserver dem Kunden eine Adresse für die Datenübertragung zum virtuellen Akkreditierungsnetzwerk (160) zuweist.

10. Verfahren nach einem der Ansprüche 1 bis 9, **dadurch gekennzeichnet, dass** das Telekommunikationsnetzwerk ein Hochgeschwindigkeitsnetzwerk auf der Basis der Ethernet-Technologie ist, und dass das vorbestimmte Zuggriffskontrollprotokoll ein Protokoll vom Typ IEEE 802.1x ist, und dass die Kunden mit dem digitalen Multiplexer von Kundenleitungen über Verbindungen vom Typ DSL verbunden sind.

11. Vorrichtung zur Akkreditierung eines Kunden (110) für den Zugriff auf mindestens ein virtuelles Netzwerk (162, 163), das es dem Kunden ermöglicht, auf die Dienste mindestens eines Diensteanbieters (130, 131) zuzugreifen, wobei das mindestens eine virtuelle Netzwerk in einem Telekommunikationsnetzwerk (150) erstellt wird, **dadurch gekennzeichnet, dass** die Akkreditierungsvorrichtung aufweist:
- Einrichtungen (200) zur Bestimmung der Kompatibilität des Kunden mit einem vorbestimmten Zugriffskontrollprotokoll für den Zugriff auf das Telekommunikationsnetzwerk,
- Einrichtungen zur Genehmigung (200), wenn der Kunde nicht mit dem vorbestimmten Zugriffskontrollprotokoll kompatibel ist, der Datenübertragung zwischen dem nicht kompatiblen Kunden und mindestens einem Abonnementsystem des Kunden bei dem mindestens einen Diensteanbieter über ein anderes Netzwerk (160) als das mindestens eine virtuelle Netzwerk, das es dem Kunden ermöglicht, auf die Dienste des mindestens einen Diensteanbieters zuzugreifen,
- Einrichtungen (200) zur Übertragung an den nicht kompatiblen Kunden, wenn der nicht kompatible Kunde sich über das Akkreditierungsnetzwerk (160) bei mindestens einem Diensteanbieter abonniert, einer Akkreditierung für den Zugriff auf das virtuelle Netzwerk (162, 163), das es ermöglicht, auf die Dienste des Diensteanbieters (130, 131) zuzugreifen, bei dem der nicht kompatible Kunde abonniert ist, und von Informationen, die es ermöglichen, den Kunden mit dem vorbestimmten Zugriffskontrollprotokoll kompatibel zu machen.

12. Computer- oder prozessorlesbarer Träger, der ein auf dem Träger aufgezeichnetes Computerprogramm enthält, **dadurch gekennzeichnet, dass** das Programm Programmcodeanweisungen für die Durchführung des Akkreditierungsverfahrens nach einem der Ansprüche 1 bis 10 enthält, wenn das Programm in einen Computer oder Prozessor geladen und von diesem ausgeführt wird.

13. Digitaler Multiplexer von Kundenleitungen (100), der es mindestens einem Kunden (110) ermöglicht, auf die Dienste mindestens eines Diensteanbieters (130, 131) zuzugreifen, wobei das mindestens eine virtuelle Netzwerk in einem Telekommunikationsnetzwerk (150) erstellt wird, **dadurch gekennzeichnet, dass** der Multiplexer von Kundenleitungen (100) aufweist:
- Einrichtungen (200) zur Bestimmung der Kompatibilität des Kunden mit einem vorbestimmten Zugriffskontrollprotokoll für den Zugriff auf das Telekommunikationsnetzwerk,
- Einrichtungen zur Genehmigung (200), wenn der Kunde nicht mit dem vorbestimmten Zugriffskontrollprotokoll kompatibel ist, der Datenübertragung zwischen dem nicht kompatiblen Kunden und mindestens einem Abonnementsystem des Kunden bei dem mindestens einen Diensteanbieter über ein anderes Netzwerk (160) als das mindestens eine virtuelle Netzwerk, das es einem Kunden ermöglicht, auf die Dienste des mindestens einen Diensteanbieters zuzugreifen,
- Einrichtungen (200) zur Übertragung an den nicht kompatiblen Kunden, wenn der nicht kompatible Kunde sich über das Akkreditierungsnetzwerk (160) bei mindestens einem Diensteanbieter abonniert, einer Akkreditierung für den Zugriff auf das virtuelle Netzwerk (162, 163), das es ermöglicht, auf die Dienste des Diensteanbieters (130, 131) zuzugreifen, bei dem der nicht kompatible Kunde abonniert ist, und von Informationen, die es ermöglichen, den Kunden mit dem vorbestimmten Zugriffskontrollprotokoll kompatibel zu machen.

14. Multiplexer nach Anspruch 13, **dadurch gekennzeichnet, dass** die Einrichtungen (200) zur Bestimmung der Kompatibilität des Kunden mit einem Zugriffskontrollprotokoll der Norm IEEE 802.1x entsprechen.
